# DEMANDE DE BREVET EUROPEEN

(11) **EP 0 606 190 A1**
(43) Date de publication de la demande: **13.07.1994**
(21) Numéro de dépôt: 94440002.7
(22) Date de dépôt: 04.01.1994
(51) Int. Cl.: B60S 3/06, B60P 3/00

(54) **Dispositif mobile de lustrage de véhicules automobiles**

(30) Priorité: 06.01.1993 FR 9300158; 06.09.1993 FR 9310692
(71) Demandeur: FABRIQUE DE PRODUITS CHIMIQUES, D'ENTRETIEN ET DE DEGRAISSAGE RAVICOLOR, S.A. Société dite:, F-68300 Saint-Louis (FR)
(72) Inventeur: Hueber, François, F-68300 Saint-Louis (FR)
(74) Mandataire: Nuss, Pierre

(57) **Abrégé**

La présente invention concerne un dispositif mobile de lustrage de véhicules automobiles.

Dispositif caractérisé en ce qu'il est essentiellement constitué par un moyen (1) de transport équipé de rails (9), sur lesquels est placée, en position de service, une machine (2) de lustrage de véhicules automobiles, par au moins un moyen (4) d'accès des véhicules à lustrer et par un ensemble (5) d'asservissement de la machine de lustrage (2).

L'invention est plus particulièrement applicable dans le domaine de la rénovation de carrosseries de véhicules automobiles.

## Description

La présente invention concerne le domaine de l'entretien des véhicules automobiles, en particulier de la rénovation de leur carrosserie, notamment par lustrage, et a pour objet un dispositif mobile de lustrage de véhicules automobiles.

Actuellement l'entretien des carrosseries des véhicules automobiles s'effectue par des lavages plus ou moins réguliers et éventuellement, à intervalles plus longs, par des opérations de lustrage successives à un lavage préalable.

Généralement, dans des garages à structure artisanale ainsi que de grande importance, les opérations de lustrage sont effectuées manuellement par un ou plusieurs opérateurs réalisant d'abord une enduction totale de la carrosserie avec un produit de lustrage, puis le lustrage proprement dit, de manière manuelle avec des chiffons ou des lustreuses orbitales et par petites surfaces successives.

Un tel procédé permet, certes, l'obtention d'un bon résultat esthétique, mais entraîne d'importants frais de main d'oeuvre, du fait qu'il nécessite trois à quatre heures de travail d'ouvrier hautement qualifié.

Pour des structures importantes, il existe des machines automatiques de lustrage, fixées au sol, dans lesquelles les véhicules automobiles sont traités de manière entièrement automatique en environ dix minutes et pratiquement sans nécessiter de retouche.

De telles machines automatiques de lustrage nécessitent, cependant, des frais d'installation très élevés, de sorte qu'elles ne se justifient pas pour la plupart des garages ou stations services et que leur installation est le plus souvent réalisée de manière centrale, les véhicules à traiter étant alors amenés à ces stations de traitement par leurs propres moyens et plus généralement par des moyens de transport spéciaux.

Cependant, ce procédé entraîne également des frais importants du fait qu'il nécessite un déplacement des véhicules sur le lieu de traitement et leur retour. En outre, dans le cas d'un tel déplacement, se pose également le problème de la disponibilité des installations qui doivent être réservées sous peine d'être occupées à l'arrivée d'un nouveau chargement.

La présente invention a pour but de pallier ces inconvénients.

Elle a, en effet, pour objet un dispositif mobile de lustrage de véhicules automobiles caractérisé en ce qu'il est essentiellement constitué par un moyen de transport équipé de rails, sur lesquels est placée, en position de service, une machine de lustrage de véhicules automobiles, par au moins un moyen d'accès des véhicules à lustrer et par un ensemble d'asservissement de la machine de lustrage.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale d'un dispositif conforme à l'invention en position de service;
la figure 2 est une vue en plan du dispositif suivant la figure 1 ;
la figure 3 est une vue analogue à celle de la figure 1 représentant le dispositif en position de transport sur route, et
la figure 4 est une vue analogue à celle de la figure 2 d'une variante de réalisation de l'invention.

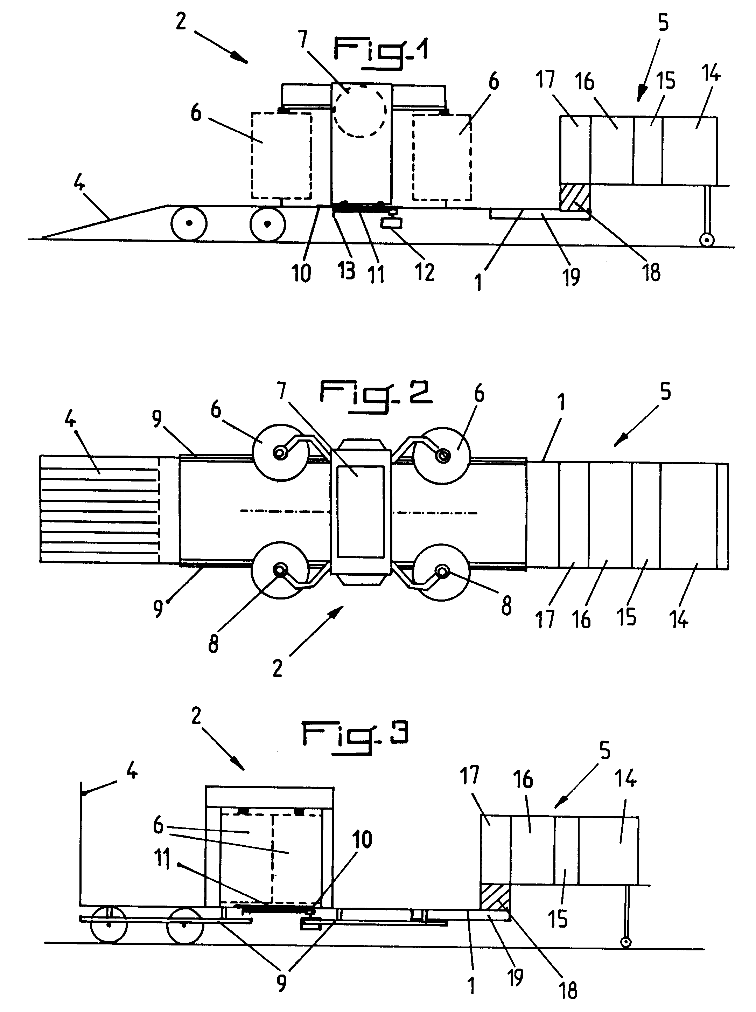

Conformément à l'invention, et comme le montrent plus particulièrement, à titre d'exemple, les figures 1, 2 et 4 des dessins annexés, le dispositif mobile de lustrage de véhicules automobiles est essentiellement constitué par un moyen 1 de transport équipé de rails, sur lesquels est placée, en position de service, une machine 2 de lustrage de véhicules automobiles, par au moins un moyen 4 d'accès des véhicules à lustrer et par un ensemble 5 d'asservissement de la machine de lustrage 2.

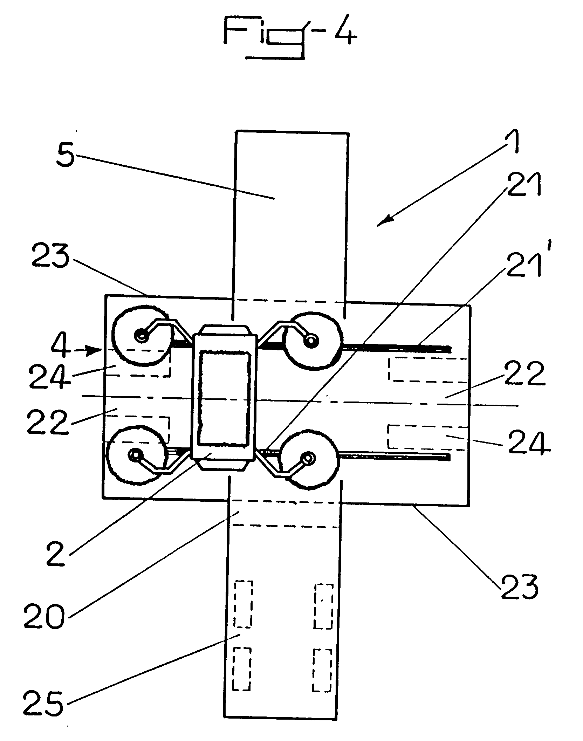

Conformément aux figures 1 à 3, le moyen de transport 1 se présente, de préférence, sous forme d'une semi-remorque surbaissée, dont la partie arrière porte la machine de lustrage 2 et est munie d'un moyen d'accès 4 sous forme d'une rampe montée à articulation à l'extrémité arrière du moyen de transport 1 et manoeuvrable par l'intermédiaire de vérins non représentés, la partie avant étant pourvue de l'ensemble 5 d'asservissement de la machine de lustrage 2.

La machine de lustrage 2 est constituée, de manière connue, sous forme d'un portique comportant au moins deux moyens latéraux de lustrage 6 et au moins un moyen transversal supérieur de lustrage 7 entraînés en synchronisme par des moteurs hydrauliques indépendants 8 ou par un moteur unique avec liaison entre eux par cardan ou analogue, ainsi que des pistolets manuels (non représentés) de projection de produits de lustrage. En position de service, la machine à lustrer 2 se déplace sur des rails 9, prévus sur les côtés longitudinaux du moyen de transport 1, par l'intermédiaire de roues profilées entraînées par des moteurs électriques.

Selon une caractéristique de l'invention, les rails 9 sont avantageusement montés le long des bords du moyen de transport 1 au moyen de bras pivotants (non représentés) solidaires de l'infrastructure du châssis et permettant un basculement, en position de transport du dispositif, des rails 9 sous ledit châssis, dans l'encombrement du moyen de transport 1.

Cette machine 2 est avantageusement montée sur un plateau 10 guidé en rotation au moyen d'une tourelle à billes ou à rouleaux 11 sur le châssis du véhicule de transport 1 et actionné en rotation manuellement ou au moyen d'un ensemble motoréducteur 12 coopérant avec une couronne dentée 13, des butées de fin de course (non représentées) étant prévues sur le châssis du véhicule de transport 1 pour coopérer avec le plateau 10 dans les positions extrêmes de ce dernier, le plateau 10 étant muni, à cet effet, de part et d'autre, d'une portion de rail destinée à coopérer avec les rails 9 prévus le long du moyen de transport 1 et des moyens de blocage (non représentés) étant prévus pour maintenir la machine 2 sur lesdites portions de rail, en position de transport. Ainsi, l'une des butées de fin de course coopère avec le plateau 10 en position de service de la machine de lustrage 2 et provoque l'arrêt de l'ensemble motoréducteur 12, dès l'entrée en contact avec ledit plateau 10, tandis que l'autre butée est destinée à être actionnée par le plateau 10 lors du mouvement de retour en position de transport de la machine de lustrage 2 et arrête l'ensemble motoréducteur 12, lorsque cette position est atteinte. Dans le cas d'un actionnement manuel, ce dernier peut être réalisé, par exemple, au moyen d'une manivelle agissant sur une vis sans fin ou analogue, les butées de fin de course étant alors simplement destinées à réaliser l'arrêt de la rotation.

Selon une variante de réalisation de l'invention, non représentée aux dessins annexés, le plateau 10 peut être rendu solidaire d'un dispositif de levage à excentrique actionné par un vérin hydraulique et soulevant ledit plateau en vue de sa rotation au moyen de l'ensemble motoréducteur, la machine 2 reposant, en position de transport, par son bâti, sur le plateau du moyen de transport 1, le plateau 10 s'escamotant sous le niveau du plateau dudit moyen de transport 1 et les roues profilées de la machine de lustrage 2 n'étant pas en contact avec les portions de rails correspondantes, tandis qu'en position de service le plateau 10 est de niveau avec le plateau du moyen de transport 1 et ses portions de rails sont alignées avec les rails 9 et sont en contact avec les roues profilées de la machine de lustrage 2.

Le dispositif de levage actionnant le plateau 10 est de type connu à excentrique, dans lequel un vérin hydraulique agit sur un moyen de poussée verticale solidaire du plateau 10, et destiné à libérer ce dernier d'une position de blocage donnée en vue de sa rotation ce moyen de poussée étant actionné en sens inverse, pour amener le plateau dans une nouvelle position de blocage par relâchement de la pression du vérin hydraulique.

Les positions de blocage peuvent être réalisées par enclenchement d'un axe, ergot ou analogue, solidaire du plateau ou du moyen de poussée, avec des évidements correspondants prévus sur le guidage du moyen de poussée ou sur le châssis du moyen de transport 1. Dans un tel cas, les butées de fin de course peuvent éventuellement être supprimées.

Bien entendu, dans ce mode de réalisation il sera nécessaire de prévoir des plaques de fermeture du plateau du moyen de transport 1, de part et d'autre du plateau 10, dans ses positions de service et de transport. Ces plaques sont, en fait, destinées à recouvrir les parties des ouvertures correspondant à l'encombrement du plateau 10 dans l'une ou l'autre position, après rotation de 90° dudit plateau. Ainsi, il sera toujours assuré une continuité du plateau du moyen de transport 1.

Au cours du transport, un assujetissement sûr de la machine de lustrage 2 sur le moyen de transport 1 sera assuré par arrimage de celle-ci au moyen de sangles.

Grâce à cette possibilité de rotation de la machine de lustrage 2 sur le moyen de transport 1, l'encombrement en largeur du dispositif conforme à l'invention peut être maintenu, pendant le transport, dans le gabarit normal, de sorte que le déplacement dudit dispositif sur route ne nécessite aucune dérogation. Lors de l'arrivée du dispositif sur un site d'utilisation, il suffira de procéder simplement à la rotation de la machine 2 afin de l'amener en position de service.

La rampe constituant le moyen 4 d'accès des véhicules automobiles à la machine de lustrage 2 forme, en position relevée pour le transport, un élément de fermeture arrière du moyen de transport 1. Cette rampe 4 est parfaitement alignée avec le portique formant la machine de lustrage 2, de sorte que les véhicules à traiter montant par la rampe 4 sont également alignés dans l'axe de la machine 2.

Le moyen de transport 1 présente, en position de service de la machine de lustrage 2, entre le haut de la rampe formant le moyen 4 et l'ensemble 5 d'asservissement de ladite machine de lustrage 2, un espace libre correspondant au déplacement sur rails de la machine de lustrage 2 pendant son fonctionnement. Cet espace est nécessaire pour permettre à la machine de lustrage 2 de passer entièrement autour du véhicule à traiter, afin que les moyens 6 et 7 de cette dernière puissent accéder à l'extrémité arrière et à l'extrémité avant des véhicules.

Les moyens latéraux 6 et transversal 7 de lustrage sont avantageusement réalisés sous forme de cylindres à lamelles de lustrage. Ces lamelles, non représentées en détail sur les dessins annexés, mais uniquement, pour chaque moyen 6 et 7, par le cylindre correspondant à leur champ d'efficacité, sont projetées et frottent contre la surface à lustrer et répartissent uniformément le produit de lustrage jusqu'à sa résorption complète.

L'ensemble 5 d'asservissement de la machine de lustrage 2 est constitué par un générateur électrique 14 d'alimentation autonome des circuits électriques de la machine de lustrage 2, par un compartiment 15 à produits de lustrage et d'entretien, par un compresseur 16 de production d'air comprimé pour l'actionnement des pistolets de pulvérisation des produits de lustrage et pour l'actionnement des accessoires pneumatiques, et par un compartiment 17 de réception et de stockage de matériels de rechange. Ainsi, le dispositif conforme à l'invention peut fonctionner de manière entièrement autonome, toute l'énergie nécessaire pour la mise en oeuvre de la machine de lustrage 2 pouvant être fournie par l'ensemble 5.

Les accessoires pneumatiques sont constitués par l'ensemble des vérins d'actionnement des bras de support des moyens de lustrage, ainsi que par des éléments de sécurité ou autres, tels que des axes ou ergots de blocage en position.

La machine de lustrage 2 est de type connu en soi et n'est pas décrite plus en détail.

Selon une autre caractéristique de l'invention, le dispositif peut être complété par une machine de lavage à haute pression à froid 18 reliée à un réservoir d'eau de lavage 19 pouvant être intégré directement dans le châssis du moyen de transport 1. La prévision d'une telle machine 18 permet la réalisation d'une unité entièrement autonome de lustrage de véhicules automobiles ne nécessitant aucune installation particulière de branchement ni autre infrastructure.

Conformément à une autre caractéristique de l'invention, le dispositif peut être complété par un moyen de chauffage à air pulsé électrique ou par rampe radiante infrarouge destiné à faciliter le traitement des véhicules en cas de température extérieure basse.

Il est également possible, selon une autre caractéristique de l'invention, de prévoir à l'extrémité avant du moyen de transport 1, par exemple sur le col de cygne de la semi-remorque formant ce moyen 1, une cellule de logement non représentée pour l'opérateur.

La prévision d'une telle cellule de logement permet l'utilisation économique du dispositif conforme à l'invention sur un territoire important, l'opérateur pouvant rester continuellement à proximité du dispositif.

Le dispositif conforme à l'invention est mis en oeuvre sur demande d'un utilisateur occasionnel, par exemple sur une aire de stationnement d'un garage, puis, après mise en marche du générateur électrique 14, la rampe d'accès 4 est abaissée et le plateau 10 de support du portique constituant la machine de lustrage 2 est mis en rotation par l'ensemble motoréducteur 12 coopérant avec la couronne dentée 13, pour amener ledit portique dans une position perpendiculaire à l'axe longitudinal du moyen de transport 1, c'est-à-dire dans une position telle que des véhicules montant par la rampe d'accès 4 puissent se placer sous ledit portique.

Les véhicules à traiter peuvent être lavés préalablement au moyen de la machine de lavage à haute pression à froid 18.

Pour le traitement proprement dit, les véhicules montent la rampe 4 et pénètrent dans la machine de lustrage 2, dont les pistolets de projection de produits de lustrage sont alors alimentés au moyen du compresseur 16. Puis, les moyens de lustrage 6 et 7 sont actionnés par l'intermédiaire de leur moteur 8 et la machine de lustrage 2 est déplacée en un mouvement d'aller et retour.

Les lamelles constituant les moyens 6 et 7 viennent alors frotter sur la carrosserie pour répartir uniformément les produits de lustrage jusqu'à leur résorption totale.

Après lustrage de l'ensemble de la carrosserie, la machine de lustrage 2 est arrêtée et le véhicule peut être descendu du moyen de transport 1 par une marche arrière en direction de la rampe 4 et sur cette dernière.

La figure 4 des dessins annexés représente une variante de réalisation de l'invention, dans laquelle la machine 2 de lustrage de véhicules automobiles est montée sur le plateau central 20 d'une semi-remorque surbaissée avec possibilité de déplacement, en service, transversalement à l'axe longitudinal, sur des rails 21, le moyen 4 d'accès des véhicules à lustrer étant constitué par deux parois latérales 22 montées, avec possibilité de pivotement et de déplacement vertical, sur les bords latéraux du plateau central 20.

L'ensemble 5 d'asservissement de la machine de lustrage 2 est identique à celui selon les figures 1 à 3 et il est également complété par une machine de lavage à haute pression, un réservoir d'eau de lavage, un moyen de chauffage et une cellule de logement pour l'opérateur. Ces éléments ne sont pas représentés en détail sur la figure 4.

Chaque paroi latérale 22 est articulée sur le bord correspondant du plateau central 20 au moyen d'un dispositif hydraulique de levage et de pivotement, non représenté, et est pourvue de deux rails 21' s'étendant, en position horizontale de la paroi, dans le prolongement des rails 21. Des dispositifs hydrauliques, tels que ceux prévus pour le levage et le pivotement des parois latérales 22, sont notamment connus pour la manoeuvre de portes ou hayons arrières de véhicules poids lourds ou de remorques et ne sont pas décrits en détail.

L'aire de traitement constituée par le plateau central 20 et par les parois latérales 22 est délimitée, en position de service de la machine de lustrage 2, d'une part, par des éléments de fermeture latéraux 23, montés à pivotement sur des montants correspondants de la semi-remorque formant le moyen de transport 1, actionnés au moyen de vérins hydrauliques, non représentés et se rabattant, en position de transport, devant les parois latérales 22, après repliement de ces dernières et, d'autre part, par deux auvents, non représentés, s'étendant, en position de service, chacun au-dessus des deux éléments de fermeture latéraux 23 correspondants, également actionnés au moyen de vérins hydrauliques, non représentés, et se rabattant, en position de repliement des parois latérales 22 et des éléments de fermeture latéraux 23, au-dessus de cesdits éléments de fermeture 23 et parois latérales 22. Ainsi, il est possible, lors de la mise en position de service des parois latérales 22, de prévoir simultanément une protection latérale contre les projections et une protection contre les éventuelles intempéries.

Selon une autre caractéristique de l'invention, chaque paroi latérale est avantageusement pourvue, du côté opposé au plateau central 20, de plateaux escamotables 24 guidés dans lesdites parois ou sur leur face opposée à celle portant les rails 21' . Ce mode de réalisation permet la réception de véhicules à empattement long, en particulier leur mise en place sur le plateau central 20 et leur enlèvement de ce dernier et, ainsi, de pallier un défaut de longueur éventuel des parois latérales 22.

Après que le véhicule à traiter ait été amené au niveau du plateau central 20, il est déplacé sur ce dernier, puis la machine 2, qui avait préalablement été déplacée du côté opposé, est mise en route et se déplace au-dessus du véhicule. A la fin du traitement, le véhicule est déplacé du côté opposé ou est reculé sur la paroi latérale 22 ayant servi à sa montée et est descendu au sol au moyen de la deuxième paroi latérale 22, ou de la première, puis évacué.

Conformément à une autre caractéristique de l'invention, la partie arrière du moyen de transport 1 sous forme de semi-remorque surbaissée est avantageusement constituée sous forme d'un habitacle fermé 25 muni de portes d'accès arrière et d'au moins une porte d'accès par le plateau central 20. Un tel habitacle 25 permet de loger différents matériels et produits nécessaires à la mise en oeuvre du dispositif conforme à l'invention.

Selon une autre caractéristique de l'invention, la semi-remorque surbaissée formant le moyen de transport 1 est équipée d'une suspension pneumatique à correction d'assiette automatique, ainsi que de vérins hydrauliques de mise à niveau. Ces derniers dispositifs sont de types connus et ne sont ni représentés ni décrits en détail.

Grâce à l'invention il est possible de réaliser un dispositif autonome mobile permettant un lustrage de véhicules automobiles. Un tel dispositif trouve plus particulièrement son application dans le domaine d'une industrie de services, c'està-dire peut être mis en oeuvre par une entreprise s'occupant spécifiquement du traitement de rénovation de carrosseries et louant ses services pendant des durées prédéterminées à différents utilisateurs, qui peuvent ainsi faire l'économie d'installations coûteuses, dont la rentabilité serait très aléatoire.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif mobile de lustrage de véhicules automobiles caractérisé en ce qu'il est essentiellement constitué par un moyen (1) de transport équipé de rails, sur lesquels est placée, en position de service, une machine (2) de lustrage de véhicules automobiles, par au moins un moyen (4) d'accès des véhicules à lustrer et par un ensemble (5) d'asservissement de la machine de lustrage (2).

2. Dispositif, suivant la revendication 1, caractérisé en ce que le moyen de transport (1) se présente, de préférence, sous forme d'une semi-remorque surbaissée, dont la partie arrière porte la machine de lustrage (2) et est munie d'un moyen d'accès (4) sous forme d'une rampe montée à articulation à l'extrémité arrière du moyen de transport (1) et manoeuvrable par l'intermédiaire de vérins, la partie avant étant pourvue de l'ensemble (5) d'asservissement de la machine de lustrage (2).

3. Dispositif, suivant la revendication 1, caractérisé en ce que les rails (9) sont avantageusement montés le long des bords du moyen de transport (1) au moyen de bras pivotants solidaires de l'infrastructure du châssis et permettant un basculement, en position de transport du dispositif, des rails (9) sous ledit châssis, dans l'encombrement du moyen de transport (1).

4. Dispositif, suivant l'une quelconque des revendications 1 et 3, caractérisé en ce que la machine de lustrage (2) est avantageusement montée sur un plateau (10) guidé en rotation au moyen d'une tourelle à billes ou à rouleaux (11) sur le châssis du véhicule de transport (1) et actionné en rotation manuellement, par l'intermédiaire d'une manivelle agissant sur une vis sans fin ou analogue coopérant avec une couronne dentée (13), ou au moyen d'un ensemble motoréducteur (12) coopérant avec une couronne dentée (13), des butées de fin de course étant prévues sur le châssis du véhicule de transport (1) pour coopérer avec le plateau (10) dans les positions extrêmes de ce dernier, le plateau (10) étant muni, à cet effet, de part et d'autre, d'une portion de rail destinée à coopérer avec les rails (9) prévus le long du moyen de transport (1) et des moyens de blocage étant prévus pour maintenir la machine de lustrage (2) sur lesdites portions de rail, en position de transport.

5. Dispositif, suivant l'une quelconque des revendications 1 et 3, caractérisé en ce que le plateau (10) est rendu solidaire d'un dispositif de levage à excentrique actionné par un vérin hydraulique et soulevant ledit plateau en vue de sa rotation au moyen de l'ensemble motoréducteur, la machine (2) reposant, en position de transport, par son bâti, sur le plateau du moyen de transport (1), le plateau (10) s'escamotant sous le niveau du plateau dudit moyen de transport (1) et les roues profilées de la machine de lustrage (2) n'étant pas en contact avec les portions de rails correspondantes, tandis qu'en position de service le plateau (10) est de niveau avec le plateau du moyen de transport (1) et ses portions de rails sont alignées avec les rails (9) et sont en contact avec les roues profilées de la machine de lustrage (2).

6. Dispositif, suivant l'une quelconque des revendications 1, 2, 4 et 5, caractérisé en ce que l'ensemble (5) d'asservissement de la machine de lustrage (2) est constitué par un générateur électrique (14) d'alimentation autonome des circuits électriques de la machine de lustrage (2), par un compartiment (15) à produits de lustrage et d'entretien, par un compresseur (16) de production d'air comprimé pour l'actionnement des pistolets de pulvérisation des produits de lustrage et pour l'actionnement des accessoires pneumatiques de la machine de lustrage (2) et des éléments de sécurité, et par un compartiment (17) de réception et de stockage de matériels de rechange.

7. Dispositif, suivant l'une quelconque des revendications 1 à 6, caractérisé en ce qu'il est complété par une machine de lavage à haute pression à froid (18) reliée à un réservoir d'eau de lavage (19) intégré directement dans le châssis du moyen de transport (1).

8. Dispositif, suivant l'une quelconque des revendications 1 à 9, caractérisé en ce qu'il est complété par un moyen de chauffage à air pulsé électrique ou par rampe radiante infrarouge.

9. Dispositif, suivant l'une quelconque des revendications 1 à 8, caractérisé en ce qu'il est pourvu à l'extrémité avant du moyen de transport (1), par exemple sur le col de cygne de la semi-remorque formant ce moyen (1), d'une cellule de logement pour l'opérateur.

10. Dispositif, suivant la revendication 1, caractérisé en ce que la machine (2) de lustrage de véhicules automobiles est montée sur le plateau central (20) d'une semi-remorque surbaissée formant le moyen de transport (1) avec possibilité de déplacement, en service, transversalement à l'axe longitudinal, sur des rails (21), le moyen (4) d'accès des véhicules à lustrer étant constitué par deux parois latérales (22) montées, avec possibilité de pivotement et de déplacement vertical, sur les bords latéraux du plateau central (20).

11. Dispositif, suivant la revendication 10, caractérisé en ce que chaque paroi latérale (22) est articulée sur le bord correspondant du plateau central (20) au moyen d'un dispositif hydraulique de levage et de pivotement et est pourvue de deux rails (21') s'étendant, en position horizontale de la paroi (22), dans le prolongement des rails (21).

12. Dispositif, suivant l'une quelconque des revendications 10 et 11, caractérisé en ce que l'aire de traitement constituée par le plateau central (20) et par les parois latérales (22) est délimitée, en position de service de la machine de lustrage (2), d'une part, par des éléments de fermeture latéraux (23), montés à pivotement sur des montants correspondants de la semi-remorque formant le moyen de transport (1), actionnés au moyen de vérins hydrauliques et se rabattant, en position de transport, devant les parois latérales (22), après repliement de ces dernières et, d'autre part, par deux auvents s'étendant, en position de service, chacun au-dessus des deux éléments de fermeture latéraux (23) correspondants, également actionnés au moyen de vérins hydrauliques et se rabattant, en position de repliement des parois latérales (22) et des éléments de fermeture latéraux (23), au-dessus de cesdits éléments de fermeture (23) et parois latérales (22).

13. Dispositif, suivant l'une quelconque des revendications 10 à 12, caractérisé en ce que chaque paroi latérale (22) est avantageusement pourvue, du côté opposé au plateau central (20), de plateaux escamotables (24) guidés dans lesdites parois ou sur leur face opposée à celle portant les rails (21').

14. Dispositif, suivant la revendication 10, caractérisé en ce que la partie arrière du moyen de transport (1) sous forme de semi-remorque surbaissée est avantageusement constituée sous forme d'un habitacle fermé (25) muni de portes d'accès arrière et d'au moins une porte d'accès par le plateau central (20).

15. Dispositif, suivant l'une quelconque des revendications 2, 9, 10, 12 et 14, caractérisé en ce que la semi-remorque surbaissée formant le moyen de transport (1) est équipée d'une suspension pneumatique à correction d'assiette automatique, ainsi que de vérins hydrauliques de mise à niveau.
